# FASCICULE DE BREVET EUROPEEN

(11) **EP 3 615 425 B1**
(45) Date de publication et mention de la délivrance du brevet: **24.11.2021**
(21) Numéro de dépôt: 17829705.7
(22) Date de dépôt: 19.12.2017
(51) Int. Cl.: B64C 39/02, B64F 3/02

(54) **SYSTÈME COMPORTANT UN DRONE, UN FIL, ET UNE STATION D'ACCUEIL, PERMETTANT DES ATTERRISSAGES AUTONOMES DU DRONE EN CONDITION DÉGRADÉE**
SYSTEM MIT EINER DROHNE, EINEM DRAHT UND EINER ANDOCKSTATION ZUR ERMÖGLICHUNG DES LANDENS VON DROHNEN IN VERSCHLECHTERTEN BEDINGUNGEN
SYSTEM COMPRISING A DRONE, A WIRE AND A DOCKING STATION ALLOWING THE AUTONOMOUS LANDING OF DRONES IN DEGRADED CONDITIONS

(43) Date de publication de la demande: 04.03.2020
(73) Titulaire: ELISTAIR, 69410 Champagne au Mont d'Or (FR)
(72) Inventeur: PENET, Timothée, Hervé, Marc, Marie, 69005 Lyon (FR); DE MARLIAVE, Guilhem, Marie, Christian, 69002 Lyon (FR); DUBOIS, Olivier, Bernard, François, 69005 Lyon (FR)
(74) Mandataire: Germain Maureau
(86) Numéro de dépôt international: PCT/IB2017/058104
(87) Numéro de publication internationale: WO 2018/100564

(56) Documents cités:
- WO-A1-2007/141795
- WO-A1-2010/092253
- BE-A- 584 175

## Description

### DOMAINE TECHNIQUE DE L'INVENTION

L'invention concerne un système comportant un drone, un fil, et une station d'accueil, le système étant spécialement conçu pour permettre des atterrissages autonomes du drone en condition dégradée.

Les drones concernés par l'invention sont tous les engins volants dits à voilure tournante, et pilotés à distance au moyen d'un dispositif de contrôle. Les drones à voilure tournante comprennent toutes les formes de modèles réduits d'hélicoptères connues.

Une station d'accueil désigne tout dispositif au sol ou sur un véhicule destiné à accueillir le drone avant et après sa mission en l'air. En général, une station d'accueil comporte au moins une plateforme d'atterrissage, qui tient lieu également de plateforme de décollage du drone.

Le fil dont il est question relie le drone à la station d'accueil. Ce fil assure souvent au moins l'alimentation électrique du drone.

Les conditions d'atterrissage dégradées pour lesquelles sont prévues le système peuvent être notamment :
- un vent violent,
- une station d'accueil en mouvement sur un véhicule comme un bateau qui tangue ou une voiture en mouvement,
- la perte pour le drone d'organes importants pour continuer un vol normal comme par exemple la perte d'un capteur d'assiette ou d'un moteur d'entraînement d'une hélice de sustentation.

### TECHNIQUE ANTÉRIEURE

L'utilisation de drones pilotés à distance est largement répandue.

Il est connu d'utiliser des drones possédant des procédures d'atterrissage automatiques. Par exemple, certains drones du commerce reviennent automatiquement à leur point de décollage lorsque l'utilisateur enclenche la procédure d'atterrissage. D'autres procédures prévoient, lorsque l'utilisateur enclenche la procédure d'atterrissage, un simple atterrissage à la verticale de l'endroit où se trouve le drone au moment où la procédure a été enclenchée, la vitesse d'atterrissage et la stabilisation du drone étant contrôlée automatiquement par le système sans intervention de l'utilisateur.

Certains drones du commerce s'appuient pour leur procédure d'atterrissage automatique sur un positionnement optique, par exemple par laser ou par caméra et reconnaissance d'image, d'autres sur des sonars à ultrasons. Ces capteurs sont également très utiles en vol intérieur à une pièce ou dans des environnements extérieurs contraints, c'est à dire munis de nombreux obstacles.

Il est également connu d'utiliser des stations d'accueil pour drone, que le drone soit filaire ou non. Voici quelques exemples relatifs aux stations d'accueil pour drone :
- Le brevet US20160001883 s'intéresse aux systèmes et méthodes pour l'atterrissage autonome d'un drone. En particulier, ce brevet décrit une interface d'atterrissage entre un drone et une station au sol, caractérisée en ce que le drone et la station au sol ont une géométrie conique d'emboîtement, résultant en un alignement automatique du drone au centre de la station au sol lors de l'atterrissage.
- Certaines stations au sol comportent un système de repositionnement mécanique après atterrissage du drone, comportant par exemple deux mâchoires en translation horizontale. Ces mâchoires sont géométriquement conçues pour recentrer chaque pied du drone lors de leur translation horizontale. Ce repositionnement mécanique précis peut permettre d'autres opérations ensuite comme le remplacement au niveau du drone d'une batterie usagée par une batterie rechargée.
- Le brevet US9139310 décrit une station d'accueil d'un drone capable de changer de manière autonome les batteries du drone. Le drone est capable d'atterrir de manière autonome sur cette station. La station d'accueil peut recharger les batteries usagées. La station d'accueil peut retirer au drone sa batterie usagée et lui redonner une batterie rechargée. Le drone et la station au sol peuvent communiquer sans fil sur les états de charge de leurs batteries réciproques.
- Le brevet EP2899128 décrit un dispositif d'accueil d'un drone sur un véhicule et le véhicule associé à ce dispositif. Le dispositif prévoit notamment un support destiné à supporter un drone, un moyen d'élévation et d'abaissement du support entre une position basse et une position haute, et un système d'arrimage du drone sur le support via un dispositif magnétique.
- Le brevet WO2010092253 décrit un drone muni d'une hélice de sustentation, une carène entourant l'hélice et une plateforme d'atterrissage. Un fil relie le train d'atterrissage du drone à la plateforme d'atterrissage ; ce fil permet d'alimenter électriquement le drone. Certaines revendications décrivent une forme de la plateforme adaptée au drone ; les figures accompagnant le brevet montrent une plateforme de type panier métallique accueillant le drone. D'autres revendications portent sur le dispositif de positionnement du drone par rapport à la plateforme d'atterrissage. Ce dispositif mesure l'inclinaison du fil d'alimentation du drone.

WO2007141795 A1 divulgue aussi un drone relié par un fil à une station d'accueil.

La technique antérieure ne propose pas de système convenable permettant un atterrissage d'un drone dans les situations suivantes :
- atterrissage du drone par grand vent,
- atterrissage du drone lorsque la plateforme d'atterrissage est en mouvement sur un véhicule terrestre ou sur un bateau par mer agitée,
- atterrissage d'urgence du drone par condition dégradée de vol, comme la perte d'un rotor de sustentation ou d'un capteur de position,
- atterrissage rapide du drone si le personnel au sol ou si le drone est visé par une agression,
- atterrissage d'urgence du drone lorsqu'un parachute de secours du drone est ouvert.

En particulier, aucun système d'atterrissage ne s'attache à résoudre les problèmes générés par les situations précédentes :
- le problème des chocs violents ou des atterrissages brusques, de tels chocs pouvant entraîner des casses matérielles particulièrement coûteuses lorsque le matériel embarqué est de valeur importante,
- le problème de la précision de l'atterrissage, une imprécision d'atterrissage pouvant se terminer par la perte du drone et de son matériel embarqué.

### EXPOSÉ DE L'INVENTION

L'invention se propose de décrire un système comportant un drone, un fil, et une station d'accueil.

Le système selon l'invention vient remédier aux inconvénients listés précédemment, il est pensé pour permettre des atterrissages :
- par vent important,
- sur des plateformes en mouvement,
- par conditions dégradées de vol du drone comme la perte d'un rotor,
- pour réceptionner le drone après ouverture du parachute d'urgence,
- très rapides en cas d'agression.

### VARIATIONS DE L'INVENTION

Selon des variations de l'invention :
- Le déplacement possible assuré par l'élément déformable est supérieur ou égal à 4cm.
- L'élément déformable est réalisé avec l'un des matériaux ou éléments suivants : une toile tendue, un ressort, un élastique, un vérin, un vérin à amortissement actif, du caoutchouc, de la mousse, des boudins pneumatiques, des boudins remplis de liquides ou de gels.
- Un frein mécanique situé sur le fil ou sur un tambour d'enroulement du fil maintient le drone plaqué sur la plateforme d'atterrissage lors du transport de l'ensemble du système, et réduit le débattement de l'ensemble plateforme - drone.
- La plateforme d'atterrissage est surélevée pendant l'atterrissage par rapport aux éléments rigides de la station d'accueil.
- Un capteur deux axes croisés de type joystick fixé entre le drone et le fil donne à l'électronique embarquée du système des informations sur le positionnement relatif entre la plateforme et le drone.
- Le drone comporte des bras supportant les hélices du drone. Ces bras sont détachables du corps du drone. Chaque bras contient un connecteur électrique et un connecteur mécanique, qui sont en regard avec un connecteur électrique et un connecteur mécanique correspondant sur le corps du drone. Les connecteurs mécanique et électrique du bras du drone pouvant être réunis en un seul élément, de même que ceux sur le corps du drone.
- La station d'accueil comporte un capot que l'on peut refermer après l'atterrissage du drone.
- Une méthode d'atterrissage prévoit l'arrêt des moteurs du drone en vol, la dernière étape de l'atterrissage se terminant par une chute.
- Pour certaines chutes du drone parachute ouvert, les moteurs en état de fonctionner ne sont pas coupés mais utilisés pour aider le drone à chuter dans la plateforme.
- Il existe un dispositif de positionnement relatif entre le drone et la plateforme d'atterrissage, le système de positionnement relatif pouvant être éventuellement réalisé par la comparaison de deux dispositifs de positionnement absolu, un sur le drone, et un sur la station.
- La hauteur de chute admissible sans casse pour le drone et sa charge utile à la verticale du centre de la plateforme est plus que doublée par rapport à une chute sur sol dur.
- Un dispositif de recentrage du drone une fois atterri implique la traction sur le drone via le fil et peut également impliquer des vibrations après l'atterrissage ou des commutations marche arrêt des moteurs du drone.
- Le drone possède un train d'atterrissage, et ce train d'atterrissage est doté de dispositifs d'amortissement.

### DESCRIPTION SOMMAIRE DES FIGURES

La figure la représente un mode de réalisation du système selon l'invention avec le drone (1) dans sa station d'accueil (3). Le drone (1) comporte un corps (11) central incluant l'électronique embarquée, des hélices (12) carénées, une charge utile (13), et un train d'atterrissage (14) prenant la forme de grands arceaux en titane. Le drone est attaché par un fil (2) à la station d'accueil (3). La station d'accueil (3) comporte un bâti (31), une plateforme d'atterrissage (32), ici une toile tendue, déformable, attachée au bâti (31) par des éléments déformables (33), ici des élastiques. Des guides (35) conduisent le fil (2) vers un tambour (34) d'enroulement du fil (2). Un capteur GPS (38) est situé au centre de la station d'accueil (3). Un capot (36) referme la station d'accueil (3). Pendant le transport, un frein bloque le tambour (34) d'enroulement du fil (2), ce qui permet de transporter la station d'accueil (3) dans toutes les positions sans risque pour le drone (1).

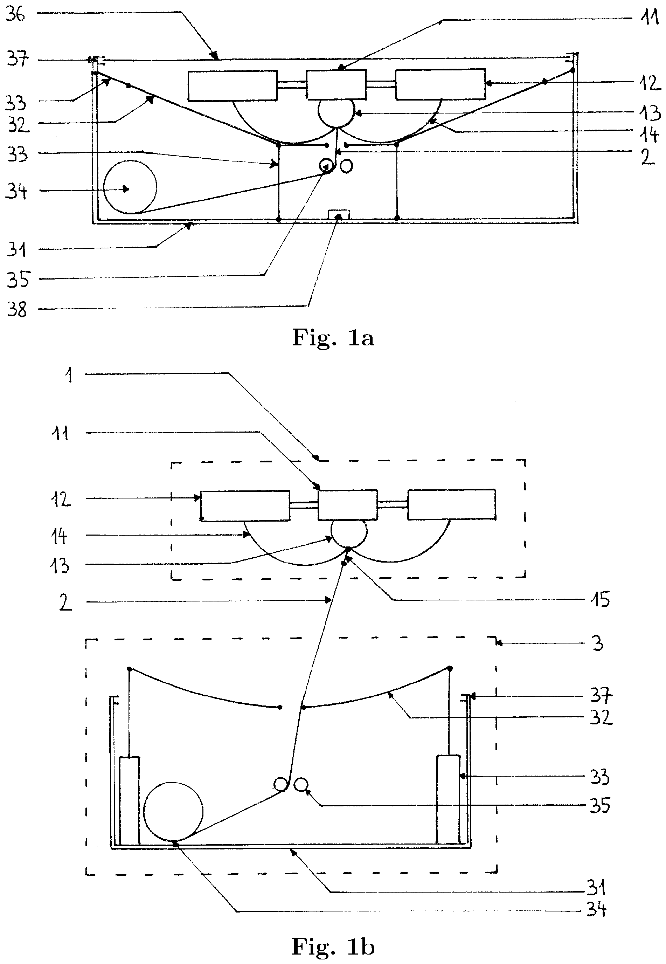

La figure 1b représente une variante du mode de réalisation du système précédent, avec le drone (1) en vol au dessus de la station d'accueil (3). Le drone (1) est constitué d'un corps (11) comportant l'électronique embarquée, d'hélices (12) carénées, d'un train d'atterrissage (14), d'une charge utile (13). Un capteur deux axes croisés de type joystick (15) permet de mesurer l'inclinaison du fil (2). Le drone (1) est relié à la station d'accueil (3) par un fil (2). La plateforme d'atterrissage (32) est en caoutchouc semi-rigide, reliée au bâti (31) par un élément déformable (33) au moment de l'atterrissage qui est ici un vérin. Ce vérin est un vérin à amortissement actif, c'est à dire qu'une électronique embarquée et une commande hydroélectrique de ces vérins permet d'amortir les chocs de manière contrôlée. Le vérin est en position haute tant que le drone (1) est en vol. Il est en position basse lorsqu'on veut ranger le drone dans la station d'accueil (3) et refermer le capot (36) via ses glissières (37). La longueur du fil (2) est contrôlée via un tambour (34) d'enroulement du fil (2).

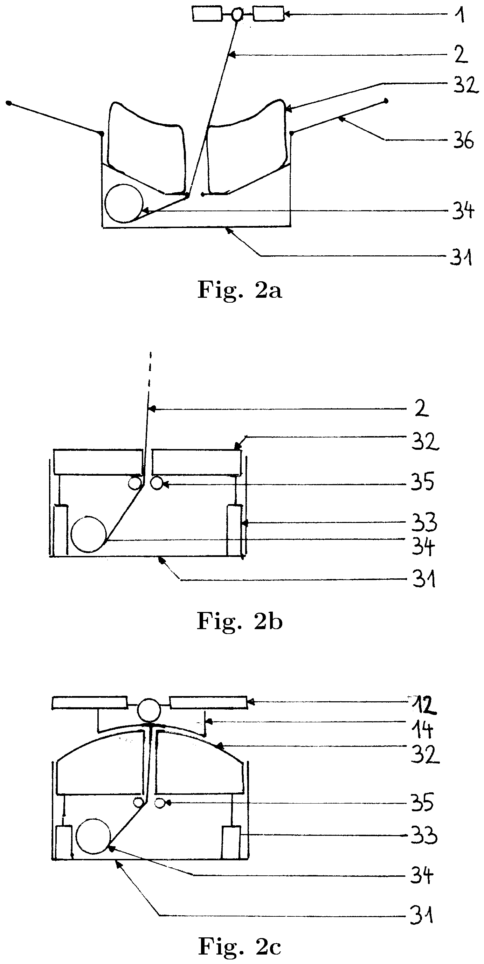

La figure 2a représente une variante du système selon l'invention. On y voit le drone (1) relié par un fil (2) à la station d'accueil (3). La plateforme d'atterrissage (32) prend la forme d'un boudin pneumatique. Le capot (36) est à deux battants. Lorsque le drone (1) est en vol, le boudin pneumatique est gonflé. Lorsqu'il faut transporter la station d'accueil (3), le boudin pneumatique est dégonflé.

La figure 2b représente une autre variante, où la plateforme d'atterrissage (32) est plate et en mousse recouverte d'une toile étanche téflonnée, sur vérin (33).

La figure 2c représente une autre variante, où la plateforme d'atterrissage (32) est en mousse, de forme convexe, et le train d'atterrissage (14) est de forme concave.

### MODE PREFERE DE RÉALISATION DE L'INVENTION

Un mode préféré de réalisation de l'invention comporte un drone (1), un fil (2), et une station d'accueil (3). Le système entier prend la forme d'une boite qui a pour dimensions environ 1 m 50 par 1 m 50 par 70 cm de hauteur pour un poids d'environ 50 kg. Le drone (1) comporte quatre bras et deux rotors contrarotatifs par bras. La largeur du drone (1) est environ 1 m 20 pour un poids d'environ 5 kg, et pour une charge utile (13) de 1 kg. La charge utile (13) est un système de reconnaissance comportant un capteur vidéo haute résolution pour la vision de jour et un capteur infrarouge haute résolution pour la vision de nuit. Cette charge utile (13) est de haute valeur.

La station d'accueil (3) comporte une plateforme d'atterrissage (32). La station d'accueil (3) est alimentée en 48 V. La puissance du drone (1) est d'environ 2500 W. Le drone (1) est alimenté par le fil (2), qui passe par le centre de la plateforme (32), et le fil (2) est enroulé sur un tambour (34) d'enroulement du fil (2). Le tambour (34) d'enroulement, bien connu des gens du métier, est disposé sous la plateforme (32). La station d'accueil (3) peut être fermée par un dispositif de capot (36) à glissière (37). Lorsque la station d'accueil (3) est fermée par son capot (36), le fil (2) est enroulé au maximum sur le tambour (34) d'enroulement et bloqué grâce à un système de frein, si bien que le drone (1) est plaqué contre la plateforme (32) et au centre de la plateforme (32). La boite peut être transportée dans tous les sens, en vertical, à l'envers, sans que le drone (1) ne bouge à l'intérieur de la boite.

La plateforme (32) est constituée d'une toile tendue sur les bords du bâti (31) par un élément déformable (33) élastique. La forme générale de la plateforme (32) ressemble à une section de parabole.

Le drone (1) comporte un corps d'atterrissage (14) constitués d'arceaux en alliage à base de titane. Ces arceaux sont déformables et permettent d'amortir les chocs. La charge utile (13) est protégée car elle se trouve à l'intérieur de l'enveloppe convexe formée par l'ensemble du drone (1) et de son corps d'atterrissage (14).

Ce drone (1) est utilisé pour des missions de surveillance. La station d'accueil (3) peut être chargée sur tout type de véhicules : terrestres, marins, aériens.

L'opérateur dispose d'un dispositif de contrôle comportant les instructions suivantes : armement, décollage, réglage altitude, réglage position relative horizontale par rapport à la station d'accueil (3), atterrissage, atterrissage d'urgence, parachute, agression, pilotage manuel.

Lorsque l'opérateur place le drone (1) en position armement, le drone (1) est alimenté via le fil (2). Les systèmes électroniques du drone (1) et de la station d'accueil (3) sont démarrés, de manière à permettre un décollage immédiat.

L'appui sur le bouton décollage provoque l'ouverture du capot (36) à glissière (37) et le décollage immédiat du drone (1) à une vitesse d'environ 3 m/s. Le drone (1) rejoint l'altitude réglée dans le système, réglable entre 3 m et 80 m, puis le drone (1) se déplace suivant une ligne horizontale jusqu'à la position déterminée par l'utilisateur. La position relative du drone (1) par rapport à la station d'accueil (3) est évaluée par le système grâce à la comparaison des mesures des positions de deux systèmes GPS embarqués, l'un sur le drone (1), l'autre (38) sur la station d'accueil (3). Lorsque le véhicule, donc la station d'accueil (3) est en mouvement, le drone (1) suit la station d'accueil (3), grâce à une boucle d'asservissement sur la position relative du drone (1) par rapport à la station d'accueil (3).

L'appui sur le bouton atterrissage provoque la procédure normale d'atterrissage. Le drone (1) revient à altitude constante à la verticale de la plateforme (32) puis redescend à 3 m/s une hauteur de 3 m au dessus de la station d'accueil (3), a priori en mouvement puisque le véhicule est en mouvement. A cette altitude, un système de positionnement radio sur la station d'accueil (3) localise avec une précision de l'ordre du cm la position du drone (1). Des accéléromètres et des anémomètres situés sur le drone (1) et situés sur la station d'accueil (3) permettent de simuler en temps réel la position calculée Pc d'atterrissage du drone (1), la vitesse calculée Vc d'atterrissage, et l'incertitude calculée IPc sur la position d'atterrissage, ces trois variables étant calculées selon plusieurs hypothèses de modes d'atterrissage, dont l'arrêt des moteurs du drone (1). Une fonction de score Sc est calculée en tant réel, fournissant un nombre d'autant plus élevé que la position calculée Pc est proche du centre de la plateforme (32), que la vitesse calculée Vc est faible, et que l'incertitude IPc est faible. La fonction de score Sc est comparée à une fonction de seuil d'acceptation Sa qui décroît avec le temps, et est considérablement diminué si le bouton agression a été enclenché. Lorsque la valeur de Sc est supérieur à la valeur de Sa, la procédure d'atterrissage associée est déclenchée.

Lorsque la procédure d'atterrissage d'urgence est enclenchée, une procédure semblable à la précédente est lancée, mais elle est optimisée pour minimiser le temps d'atterrissage. Les vitesses horizontales et verticales sont les maximales admissibles pour le drone (1). Les fonctions score Sc et Sa sont calculées différemment, pour que l'atterrissage ait lieu très rapidement, en acceptant notamment des vitesses d'impact supérieures.

Lorsque la procédure parachute est enclenchée, le système électronique évalue, en fonction des anémomètres, des données des accéléromètres, s'il est encore en possibilité de placer le drone (1) à la position qui lui permettront de tomber directement dans la plateforme (32). Si oui, le drone (1) se déplace d'abord à vitesse maximale à cette position, puis le parachute est ouvert. Sinon, le parachute est directement ouvert, et le fil (2) exerce une traction de l'ordre de 15 kg sur le drone (1), pour ramener le drone (1) au centre de la plateforme (32).

Le drone (1), si les paramètres de vol sont critiques, comme par exemple le dysfonctionnement d'un moteur ou d'un capteur embarqué, peut déclencher lui-même l'une ou l'autre des procédures d'atterrissage.

A tout moment, sauf si le parachute est ouvert, l'opérateur peut prendre le contrôle manuel du drone (1).

Le système est conçu pour accepter des chutes du drone (1) à 15 m/s décalées jusqu'à 70 cm du centre de la plateforme (32), en protégeant la charge utile (13) et l'ensemble du drone (1). Néanmoins, si la chute a lieu a plus de 20 cm du centre de la plateforme (32), les bras du drone (1) supportant les rotors peuvent casser. Le drone (1) est donc conçu avec des bras amovibles échangeables rapidement. Les chocs sont amortis au centre de la plateforme (32) grâce à la superposition des effets des amortissements par les élastiques, conçus pour s'allonger d'environ 15 cm pour une vitesse d'atterrissage de 10 m/s, l'élasticité du tissu employé, et enfin le corps d'atterrissage (14), qui s'applatissent d'environ 10 cm pour cette même vitesse de chute. En tout, une chute à 15 m/s est amorti sur une distance de 30 cm.

Une fois l'atterrissage effectué, le fil (2) exerce une traction de l'ordre de 15kg sur le drone (1) ce qui a pour effet de replacer le drone (1) au centre de la plateforme (32), ce qui est aidé par le fait que la toile est recouverte de téflon, et que le coefficient de frottement entre le corps d'atterrissage (14) et la toile recouverte de téflon est faible. Puis le capot (36) se referme en coulissant dans les glissières (37).

Selon une première variation de ce mode de réalisation de l'invention, la toile de la plateforme (32) est tendue sur une structure carrée sur vérins. A l'ouverture du capot (36), la structure carrée est élevée par les vérins, au dessus des bords de la station d'accueil (3), afin que lors d'une chute fortement décentrée du drone (1) sur la station d'accueil (3), le drone (1) ne heurte pas les bords rigides de la station d'accueil (3), mais tombe sur les bords de la plateforme d'atterrissage (32). La pression dans les vérins est ajustée afin qu'ils amortissent une chute du drone (1). Les vérins constituent ainsi un élément déformable (33) liant la plateforme (32) au bâti (31), absorbant une partie de l'énergie d'impact lors d'une chute du drone. Selon une variante de cette première variation, les vérins corrigent l'assiette de la plateforme (32) en temps réel, afin que la plateforme (32) soit toujours bien horizontale. Selon une deuxième variante de cette première variation, les vérins amortissent dynamiquement l'impact du drone (1) sur la plateforme, selon des techniques bien connues des gens du métier.

Selon une deuxième variation, le système de positionnement en champ proche n'est pas réalisé via un système de positionnement radio, mais par un capteur deux axes croisés de type joystick (15), situé à l'interface entre le fil (2) et le drone (1). Le capteur deux axes croisés de type joystick (15) donne une information d'inclinaison entre le fil (2) et le drone (1), et l'éloignement du drone (1) est mesuré grâce à la mesure de la longueur de fil (2) déroulé par l'enrouleur.

Selon une troisième variation, des patins lisses sont intégrés au corps d'atterrissage (14) du drone (1), ce qui facilite le glissement du drone (1) sur la plateforme (32), afin de faciliter le repositionnement du drone (1) après atterrissage. Selon des variantes de cette troisième variation :
1) après l'atterrissage, un vibreur vient au contact de la plateforme (32) et fait vibrer la plateforme (32), ce qui a pour effet de repositionner le drone (1) au plus proche du centre de la plateforme (32). Une précision de 5 cm a été obtenue.
2) après l'atterrissage, les moteurs du drone (1) sont allumés et éteints avec une période de l'ordre de la seconde de manière à générer des petits sauts du drone (1) et celui-ci regagne naturellement par gravité le centre de la plateforme (32). On peut également générer automatiquement des petits vols du drone (1) contrôlés par le système embarqué pour que le drone (1) regagne le centre de la plateforme (32).
3) l'ensemble de la plateforme (32) est montée sur vérins et ces vérins peuvent modifier l'orientation de la nacelle et générer des secousses.

Selon une quatrième variation, la plateforme d'atterrissage (32) est une surface en caoutchouc attachée via des ressorts à un cadre métallique monté sur vérins. Lorsque le drone (1) est en vol, la plateforme (32) est en position haute, de manière à faire dépasser la plateforme (32) des bords de la station d'accueil (3). La pression dans les vérins en position haute, les ressorts, et l'ensemble de la plateforme (32) ont été ajustés expérimentalement, afin que, lors d'une chute du drone (1) d'une hauteur de 10 m, l'accélération maximale résultante au niveau du drone (1) soit contenue, suffisamment pour que cette chute de 10 m puisse être répétée un grand nombre de fois sans dommage pour le drone (1) et la charge utile (13). La plateforme (32) de cette variation fait 2 m de diamètre. Dans cette variation, la plateforme (32) d'atterrissage est recouverte de téflon, est de forme concave, possède un rayon de courbure de 5 m. Le caoutchouc employé se déforme peu sous l'effet du seul poids du drone (1), si bien que, lorsque le drone (1) est positionné sur le bord de la plateforme (32), il revient par glissement au centre de la plateforme (32), du fait de la géométrie concave de la plateforme (32), et du faible coefficient de frottement entre le téflon et le corps d'atterrissage (14) du drone (1). Les tests ont conduit notre drone (1) à se repositionner systématiquement, sans traction sur le fil (2), à une distance inférieure à 5cm du centre de la plateforme (32), et avec une traction sur le fil (2), à une distance inférieure à 1cm du centre de la plateforme (32).

Selon une cinquième variation, les procédures d'atterrissage prévoient de contrôler la position latérale du drone (1), alors que le parachute de secours est ouvert et que le drone (1) chute, ralenti par le parachute ouvert. Dans cette variation, la position latérale est contrôlée via les vitesses des hélices (12). Le but est alors de recentrer le drone (1) au dessus de la plateforme (32). Plusieurs conditions dégradées sont prévues : pertes de un ou plusieurs rotors de sustentation, pertes de tel ou tel capteur.

Selon une sixième variation, la procédure d'atterrissage prévoit de mettre les moteurs du drone (1) à vitesse maximale, et le rapatriement du drone (1) sur la plateforme (32) est assuré par la traction du fil (2) sur le drone (1). Une telle procédure permet de s'affranchir des mouvements relatifs de la plateforme (32) du drone (1), des mesures de position relatives du drone (1) par rapport à la plateforme (32), ou des bourrasques de vent.

### POSSIBILITÉS D'APPLICATIONS INDUSTRIELLES

Le système selon l'invention est particulièrement destiné à l'automatisation de l'atterrissage pour tous drones (1) filaires, en particulier lorsqu'il est prévu que le drone (1) puisse atterrir :
- par vent important,
- sur des véhicules en mouvement,
- par conditions dégradées de vol du drone (1) comme la perte d'un rotor,
- pour réceptionner le drone (1) après ouverture du parachute d'urgence,
- très rapidement en cas d'agression, à des vitesses proches de la chute libre.

## Revendications

1. Système comportant un drone (1) équipé de moteurs et relié par un fil (2) à une station d'accueil (3) équipée d'une plateforme d'atterrissage (32) et d'un bâti (31):
- la plateforme d'atterrissage (32) étant mobile par rapport au bâti (31),
- la mobilité de la plateforme d'atterrissage (32) s'exerçant lors de l'atterrissage du drone (1),
- la mobilité de la plateforme d'atterrissage (32) étant assurée par un élément déformable, soit la plateforme (32) elle-même, soit par un élément déformable (33) reliant la plateforme (32) au bâti (31),
- tel que sous l'effet d'un choc pendant l'atterrissage, l'élément déformable (32 ou 33) reprenne une partie de l'énergie d'impact,
le système comprenant en outre :
- un tambour (34) d'enroulement du fil (2) ;
- au moins un capteur de positionnement du drone et de la sation d'accueil ;
- au moins un capteur accéléromètrique et au moins un capteur anémométrique sur le drone et sur la station d'accueil ;
- un dispositif de contrôle configuré pour asservir une position du drone relativement à la station d'accueil, et pour asservir une assiette du drone, en fonction des mesures des capteurs
le système étant configuré pour, pendant une phase d'atterrissage:
i) arrêter l'asservissement de la position du drone,
ii) commander une poussée des moteurs supérieure au poids du drone (1),
iii) commander un asservissement de l'assiette du drone (1),
iv) commander une traction sur le fil (2) avec le tambour d'enroulement du fil (2) pour ramener le drone (1) sur la plateforme (32),
le système étant tel que la plateforme d'atterrissage (32) a une forme convexe, que le drone (1) possède un corps d'atterrissage (14), et que ce corps d'atterrissage (14) a une forme concave.

2. Système selon la revendication précédente, **caractérisé en ce que** le système est configuré pour arrêter les moteurs du drone (1) en vol, l'atterrissage se terminant par une chute du drone (1) sur la plateforme (32).

3. Système selon l'une des revendications précédentes, **caractérisé en ce que** le système (1) comporte un parachute et que le système est configuré pour, en présence de certains dysfonctionnements :
- déployer le parachute automatiquement,
- continuer à utiliser les moteurs pour aider le drone (1) à chuter dans la plateforme (32).

4. Système selon l'une des revendications précédentes, comportant en outre un dispositif de recentrage du drone (1) configuré pour être mise en œuvre une fois atterri, le dispositif de recentrage impliquant au moins la traction sur le drone (1) via le fil (2) et pouvant impliquer :
- des vibrations après l'atterrissage,
- ou bien des commutations marche arrêt des moteurs du drone (1).

## Patentansprüche

1. System, aufweisend eine Drohne (1), die mit Motoren ausgestattet und über einen Draht (2) mit einer Andockstation (3) verbunden ist, die mit einer Landeplattform (32) und einem Gestell (31) ausgestattet ist:
- wobei die Landeplattform (32) im Verhältnis zum Gestell (31) beweglich ist,
- wobei die Mobilität der Landeplattform (32) während des Landens der Drohne (1) erfolgt,
- wobei die Mobilität der Landeplattform (32) von einem verformbaren Element abgesichert wird, entweder von der Plattform (32) selbst oder von einem verformbaren Element (33), das die Plattform (32) mit dem Gestell (31) verbindet,
- so dass unter der Wirkung eines Stoßes während des Landens das verformbare Element (32 oder 33) einen Teil der Aufprallenergie aufnimmt,
wobei das System ferner umfasst:
- eine Wickeltrommel (32) des Drahtes (2);
- mindestens einen Positionierungssensor der Drohne und der Andockstation;
- mindestens einen Beschleunigungssensor und mindestens einen Windmessungssensor auf der Drohne und auf der Andockstation;
- eine Kontrollvorrichtung, die ausgelegt ist, um in Abhängigkeit von den Messungen der Sensoren eine Position der Drohne relativ zur Andockstation zu regeln und um eine Fluglage der Drohne zu regeln,
wobei das System ausgelegt ist, um während einer Landephase:
i) die Regelung der Position der Drohne anzuhalten,
ii) einen Schub der Motoren, der größer ist als das Gewicht der Drohne (1), zu befehlen,
iii) eine Regelung der Fluglage der Drohne (1) zu befehlen,
iv) einen Zug am Draht (2) mit der Wickeltrommel des Drahtes (2) zu befehlen, um die Drohne (1) auf die Plattform (32) zu holen,
wobei das System derart ist, dass die Landeplattform (32) eine konvexe Form hat, dass die Drohne (1) einen Landekörper (14) besitzt und dass dieser Landekörper (14) eine konkave Form hat.

2. System nach vorangehendem Anspruch, **dadurch gekennzeichnet, dass** das System ausgelegt ist, um die Motoren der Drohne (1) im Flug anzuhalten, wobei die Landung durch einen Fall der Drohne (1) auf die Plattform (32) endet.

3. System nach einem der vorangehenden Ansprüche, **dadurch gekennzeichnet, dass** das System (1) einen Fallschirm aufweist und dass das System ausgelegt ist, um bei Vorliegen bestimmter Fehlfunktionen:
- den Fallschirm automatisch zu entfalten,
- die Nutzung der Motoren fortzusetzen, um der Drohne (1) zu helfen, in die Plattform (32) zu fallen.

4. System nach einem der vorangehenden Ansprüche, aufweisend ferner ein Rezentrierungssystem der Drohne (1), das ausgelegt ist, um nach dem Landen angewendet zu werden, wobei das Rezentrierungssystem mindestens das Ziehen an der Drohne (1) über den Draht (2) impliziert und:
- Vibrationen nach dem Landen,
- oder Ein-Aus-Schaltungen der Motoren der Drohne (1) implizieren kann.

## Claims

1. A system including a drone (1) equipped with motors and connected by a wire (2) to a docking station (3) equipped with a landing pad (32) and a frame (31):
- the landing pad (32) being movable relative to the frame (31),
- the mobility of the landing pad (32) being exerted during landing of the drone (1),
- the mobility of the landing pad (32) being ensured by a deformable element, either the pad (32) itself, or by a deformable element (33) connecting the platform (32) to the frame (31),
- such that under the effect of an impact during landing, the deformable element (32 or 33) takes up part of the impact energy,
the system further comprising:
- a drum (34) for winding the wire (2);
- at least one positioning sensor of the drone and the docking station;
- at least one accelerometer sensor and at least one anemometric sensor on the drone and on the docking station;
- a control device configured to servo-control a position of the drone relative to the docking station, and to servo-control a pitch attitude of the drone, as a function of the measurements from the sensors,
the system being configured, during a landing phase, to:
i) stop the servo-control of the position of the drone,
ii) control a thrust of the motors greater than the weight of the drone (1),
iii) control a servo-control of the pitch attitude of the drone (1),
iv) control a pull on the wire (2) with the winding drum of the wire (2) to bring the drone (1) back to the pad (32),
the system being such that the landing pad (32) has a convex shape, that the drone (1) has a landing body (14), and that this landing body (14) has a concave shape.

2. The system according to the preceding claim, **characterized in that** the system is configured to stop the engines of the drone (1) in flight, the landing ending with a fall of the drone (1) on the pad (32).

3. The system according to any of the preceding claims, **characterized in that** the system (1) includes a parachute and that the system is configured, in the presence of certain malfunctions, to:
- automatically deploy the parachute,
- continue to use the motors to help the drone (1) to fall into the pad (32).

4. The system according to any of the preceding claims, further including a device for recentering the drone (1) configured to be implemented once landed, the refocusing device involving at least pulling on the drone (1) via the wire (2) and may involve:
- vibrations after landing,
- or switching on and off of the motors of the drone (1).
